# EUROPEAN PATENT APPLICATION

(11) **EP 2 669 261 A2**
(43) Date of publication of application: **04.12.2013**
(21) Application number: 11857115.7
(22) Date of filing: 28.12.2011
(51) Int. Cl.: C05F 3/00, C05F 3/06

(54) **METHOD FOR PRODUCING GRANULATED ORGANOMINERAL FERTILIZERS FROM ORGANIC WASTE MATERIALS AND DEVICE FOR IMPLEMENTING SAME**

(30) Priority: 24.01.2011 RU 2011102469
(71) Applicant: Zakrytoe Akcionernoe Obschestvo "Twin Trading Company", Moscow 119330 (RU)
(72) Inventor: ABRAMOV, Yakov Kuzmich, Moscow 109202 (RU); VESELOV, Vladimir Mihailovich, Moscow 123181 (RU); ZALEVSKY, Viktor Mihailovich, Moscow 125080 (RU); TAMURKA, Vitaly Grigorevich, Moscow 109386 (RU); VOLODIN, Veniamin Sergeevich, Moskovskaya obl. 142700 (RU); EVDOKIMOV, Vladimir Dmitrievich, Moscow 127083 (RU); ARGUNOV, Nikolay Dmitrievich, Moscow 115446 (RU); MOTOVILOVA, Ljubov' Viktorovna, Moskovskaya obl. 140032 (RU); BOGDANOVA, Lidija Petrovna, Moskovskaya obl. 142701 (RU); MIRONOV, Boris Ivanovich, Moscow 109544 (RU); TALEEVA, Elena Vladimirovna, Moskovskaya obl. 142104 (RU); DVORYANINOV, Nikolay Vladimirovich, Moskovskaya obl. 140011 (RU)
(74) Representative: Spengler, Robert
(86) International application number: PCT/RU2011/001030
(87) International publication number: WO 2012/102641

(57) **Abstract**

The invention relates to the agricultural industry, specifically to the processing of organic waste materials (livestock and poultry farming waste, domestic and industrial waste water, straw, peat and other organic substances) to produce organomineral fertilizers in granulated form.

The method for producing a granulated organomineral fertilizer from organic waste materials comprises feeding the mixture components, removing mechanical impurities, mixing with the addition of mineral components, grinding, decontaminating, homogenizing, granulating and drying. The grinding, decontamination, homogenization and granulation processes are performed simultaneously on continuously operating heated rollers with the mass to be processed being passed through shaping rings of the rollers and with cutting to form granules. The granules are dried to a set moisture content in a continuously operating heated vacuum dryer operating in pulsed vacuum modes.

The device for producing a granulated organomineral fertilizer from organic waste materials consists of means for feeding the mixture components, removing mechanical impurities, mixing, grinding, decontaminating, homogenizing, granulating and drying. The means for grinding, decontaminating, homogenizing and granulating are in the form of one or more healed horizontal rollers mounted parallel to one another. Shaping rings with blades for cutting the granules to size are provided on the ends of the rollers. The drying means is in the form of a continuously operating heated vacuum dryer, which is connected by a pipeline with quick-response valves to a receiver end a vacuum pump.

The invention makes it possible to reduce the amount of time required for running the process cycle and to produce granules with improved use properties.

## Description

The invention relates to agriculture, namely the processing of organic waste (livestock and poultry farms, domestic and industrial waste water, straw, peat and other organic substances) and can be used to produce organic-mineral fertilizers in the form of pellets.

Currently in use method for producing pelleted organomineral fertilizer (RF Patent Nº 2198152 S05F3/00, 14/06/2000), under which semi-liquid manure, water absorbing material, filler and mineral admixtures are fed to a mixer in doses, mixed, then the resulting mass is pelleted in a drum. Humidity of pelleted organomineral mixture is of 55-60%. After pelletizing the organomineral fertilizers are disinfected by biothermal way.

The disadvantages of this method are: low productivity of equipment due to lack of forced drying of the resulting pellets, insufficient action on water- absorbing materials to be impregnated deeply with components of liquid manure and mineral admixtures, the inability to obtain the calibrated pellets of the equal size.

Currently in use the production line for the processing of agro industrial waste to obtain organic or complex organomineral fertilizers (RF Patent Nº 2118631 S05F3/06, 10/09/1998). Wet waste of agro industrial complex is loaded into an accumulation tank, from which they are fed in doses into a mixer by means of a conveyor. The resulting mass is fed into a drying chamber, where coolant gas is supplied, which dehydrates and disinfects the wet waste. In the drying chamber the crushing, breaking, and dispersing of large inclusions of waste occurs.

The disadvantage of this line is that it is designed for processing of agro-industrial complexes only; it is cumbersome and requires a long process of drying.

Currently in use a method of producing pelleted organomineral fertilizers from organic waste and an apparatus for its realization (RF Patent Nº 2135437 S05F3/00, 3/06, 27/08/1999) where mixing, grinding, moving, homogenization of organic waste is performed by means of acting on the mixture with electro hydraulic discharges moving along the length of an apparatus periodically. Dehydration and pelletizing of processed mass takes place after the above mentioned operations performances.

The apparatus for carrying out the method includes a means for removing solids, supplying with mixture components, mixing, grinding, moving, homogenizing, dehydration and pelletization, where the means for mixing, grinding, homogenizing, and moving are made in the form of electro hydraulic chamber in the casing of which to ensure the moving of electrical discharges periodically along its length, and a number of pairs of electrodes is placed and the means for dehydration and pelletization is placed at the output of the chamber.

However, the electrical discharges are known to initiate the generation of a variety of non-controlled chemical processes and, as a consequence, the formation of a wide variety of materials, up to toxic ones, which may affect a fertilizer's quality.

Closest to the claimed invention according to the number of similar features and a solved technical problem is the invention for the method of producing pellets from organic waste and apparatus for its realization (patent number 641871 USSR, S05F3/00, 13/11/1974). According to the method the mechanical impurities are removed from the organic waste then the latter is mixed, ground, and then pelletized by extruding with formation of beads and subsequent its breaking due to the free fall on the conveyor. Drying of pellets is carried out with hot gases at first on the vibrating perforated tray with subsequent exposure of pellets in the hopper, and then drying is continued on a fixed perforated tray with its subsequent cooling.

This method is realized in an apparatus comprising means for removing of solids, mixing, grinding, pelletizing and drying with hot gases. To perform a pelletizing a means is used, which is made as a screw extruder with a drawing nozzle below which the conveyor is located, and a means for drying with hot gases is made in the form of a vibrating and a fixed perforated trays with a sloped bottom, below which the pipes for hot air supplying are installed. Between the trays a hopper for pellets exposure is placed, and at the end of the fixed tray a pipe for cold air supplying is installed.

This invention has a long process cycle associated with the multistage of processes, which requires large industrial areas and high energy costs. In addition, the resulting pellets are heterogeneous in size, which is due to their spontaneous formation, and they do not provide the required performance properties (strength, and the degree of disinfection).

The engineering problem of the proposed invention is to reduce the time of the processing cycle to obtain pelletized organomineral fertilizers by combining individual operations while improving operational properties of the pellets obtained.

This problem is solved by such a way that in the production process of pelletized organomineral fertilizers from organic waste, which includes supply of the mixture components, removing of solids, mixing with the addition of mineral components, grinding, disinfecting, homogenization, pelletizing and drying, according to the invention, the processes of grinding, disinfecting, homogenization and pelletizing are carried out simultaneously on the heated rollers with continuous transmission of processed mass through shaping rings of rollers and cutting-off as pellets, and the drying is carried out in a heated vacuum dryer under a continuous vacuum-pulse mode.

To remove free moisture from the components of the mixture before mixing its dehydration is performed by pressing out in a belt conveyor equipped with pressure-exerting rollers using a vacuum-pulse action mode.

When greater moisture of source components takes place, free moisture is additionally removed by means of forced passing of the heated coolant gas through a layer of the mixture components under a vacuum-pulse mode.

Organic admixtures are added (humic substances, peat, wood chips, etc.) into a mixture while mixing. The addition of humic substances is caused by the requirement of detoxification.

Drying the pellets in a heated vacuum continuous dryer is desirable to perform up to the humidity not exceeding 20%.

The proposed apparatus to realize the method comprising a means for feeding the mixture components, removing solids, mixing, grinding, disinfecting, homogenization, pelletization and drying, according to the invention and it is equipped with the means of grinding, disinfecting, homogenization and pelletization, made in the form of one or more installed in parallel heated horizontal rollers placed after mixing mean and having end shaping rings with knives on the border for cutting-off pellets in equal size, and a means for vacuum drying is made in the form of heated vacuum continuous dryer, connected by pipeline with quick-acting valves to a receiver and a vacuum pump.

If necessary, the apparatus comprises additionally a means for pre-grinding of the mixture components which is installed after the means to remove solid particles.

Prior a mixing means and to dehydrate the initial mixture components the apparatus can be provided with a band vacuum filter with pressure-exerting rollers (located above and below the filter cloth) and connected by pipeline with quick-acting valves to a receiver and vacuum pump.

And for pressing out of great wet waste it contains an additional means for dehydration, located after the main means of dehydration, made in the form of band vacuum filter with pressure-exerting rollers connected to a source of heated coolant gas on the one hand and the pipeline with quick-acting valves to a receiver and a vacuum pump on the opposite side for the supply a coolant.

Such a complex of essential features allows combining the performing of above mentioned operations, eliminating the need for individual equipment for grinding, disinfecting, homogenizing, and pelletizing.

In such a way the drying is carried out on the heated continuous rollers at intense shear deformations, the action of pressure pulses and a heating of processed fertilizer due to dissipation in a vacuum dryer under thermal vacuum pulse action modes. When high humidity of initial mix components takes place, the preliminarily removal of free moisture is performed by forced passing of heated coolant gas under thermo-vacuum-pulse modes.

Disinfection is performed in a mixer on the heated continuous rollers and a vacuum dryer under thermal vacuum-pulse modes.

Homogenization takes place in the mixer on rollers under intense shear deformations.

Performing of the drying process under vacuum-pulse modes leads to a sharp decrease in humidity of fertilizer when creating a vacuum pulse in connection with its boiling-up in deep layers and migration to the surface and following moisture removing from the fertilizer by heating-up with coolant gas, which leads to the acceleration of the process.

In addition, the thermal vacuum pulse modes increase the efficiency of disinfection, homogenization, increasing agrochemical properties of the pellets.

Thus, the method of manufacturing of pelletized organomineral fertilizer and apparatus for its implementation ensure in its essential features the new technical properties which are not inherent technical solutions known in the art.

The drawings present:
Fig. 1 - General diagram of an apparatus for the production of pelletized organomineral fertilizers;
Fig. 2 (a, b) - means for dehydration (primary and secondary);
Fig. 3 - rollers.

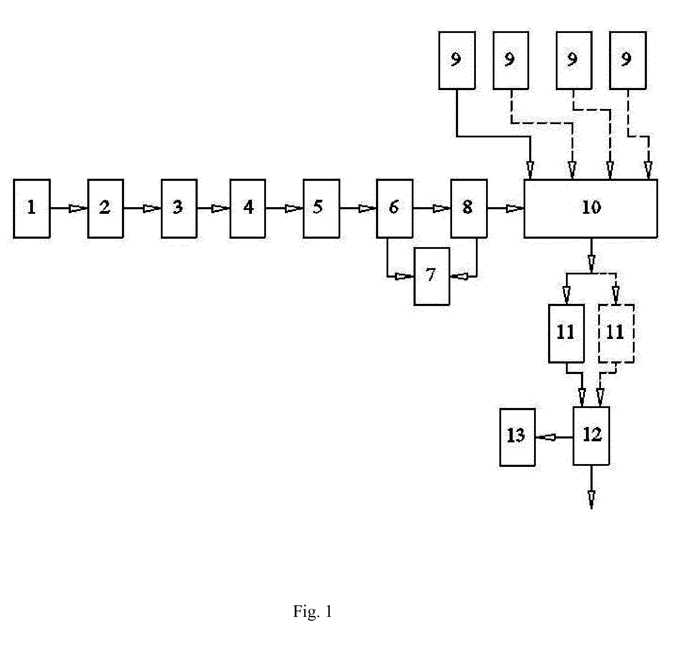

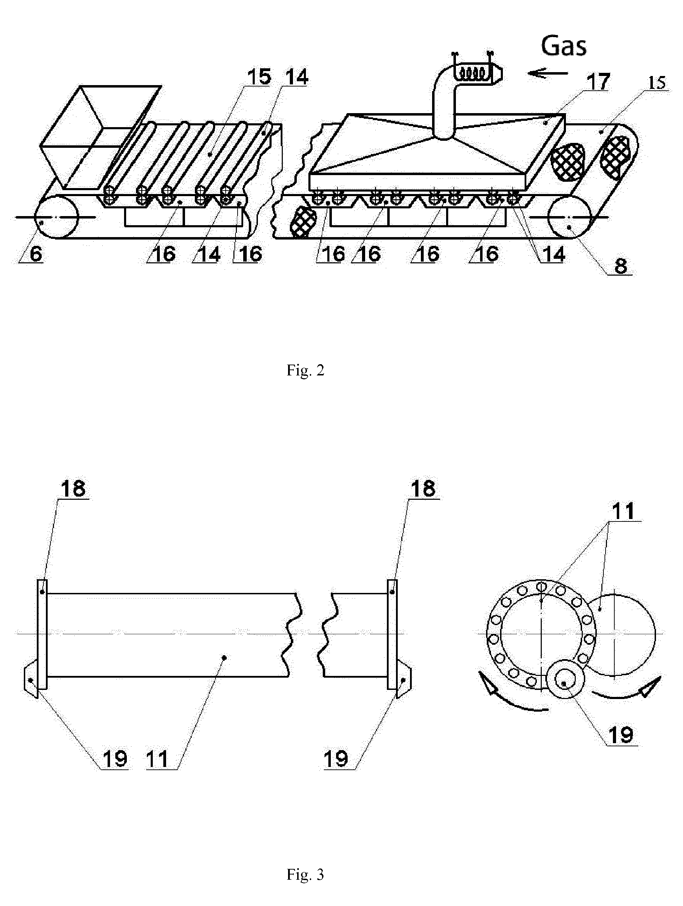

The apparatus for manufacturing of pelletized organomineral fertilizer from organic waste (Fig. 1) consists of:
- storage hopper 1;
- belt conveyor 2, which provides the uniform feed of raw material components;
- magnetic separator 3;
- rock remover 4;
- mechanical comminuting-disintegrating machine 5 (if necessary);
- means for dehydration 6, which presents (2a) a vacuum belt filter 6, equipped with pressure-exerting rollers 14, located above and below the filter cloth 15, vacuum chambers 16, which are connected to an installation of a vacuum-pulse action 7;
- the means of vacuum-pulse action 7, 13, consisting of a vacuum pump, receiver, quick-response valves and pipings;
- additional means for dehydration 8 (if necessary), structurally performed similar means for dehydration 6 and equipped with (Fig. 2b) a feeding device of the hot coolant gas 17 above the filter cloth. Means for dehydration and additional dehydration can be combined with:
- dosing apparatus 9 for other components (mineral compounds, humates, micronutrients, etc.) to ensure compliance with the formulation of organomineral fertilizers;
- mechanical mixer 10;
- rollers 11, consisting of (Figure 3) one or more mounted in parallel horizontal heated rollers 11 with edge shaping rings 18 with the blades 19 for cutting-off pellets in size;
- heated continuous vacuum dryer 12, connected to vacuum-pulse action apparatus 13;

The method is realized as follows.

Raw components of a fertilizer (organic waste) are loaded into the storage hopper 1 and by means of a belt conveyor 2 are transferred to the purification operation against solid particles, at first in the magnetic separator 3 and then to a rock remover 4. Then, purified raw components are fed, if necessary, to a mechanical comminuting-disintegrating machine 5 for pre-grinding, followed by to a means of dehydration 6 when high humidity of raw components of 60-85% takes place. Dehydration is performed by means of pressing out in the belt vacuum filter 6 (2a) equipped with pressure-exerting rollers 14, located above and below the filter cloth 15 in the area of vacuum chambers 16. During the pressing out cycle the raw components are exposed to vacuum-pulse action, which in contrast to the usual vacuum processing, is characterized by sharp decompression of the processed material, due to which, more intensive evaporation and fast drying material takes place.

If necessary, a vacuum pulse forced passing of heated coolant gas from the unit for the hot gas supply 17 through a layer of mixture components is performed by means of an additional means of dehydration 8. Using of power-vacuum-pulse action modes allows performing a forced passing at high speed to remove the free moisture from the surface at high flow turbulence.

Dehydrated raw components are fed into a mechanical mixer 10, into which other components of fertilizer (humic substances, mineral fertilizers, and micronutrients) are fed from the dosing apparatuses 9.

After mixing in the mixer 10 a mix is fed to the rollers 11, where the final operations of grinding, disinfection, homogenization and drying to a moisture content of 20-60% are performed. The said operations are carried out (Fig. 3) directly in the heated continuous rollers 11 simultaneously with the molding of pellets, which occurs when passing the treated mass through the end shaping rings 11, rolls 18 and cutting-off with blades 19. At greater moisture the pellets have insufficient strength, easily crinkle, and can stick together. At smaller moisture content the surface of pellets is rough, and with cracks. Pellets can crumble and an appropriate market condition is lost.

During the rolling process a fermentation of a fertilizer also takes place. This is achieved not only due to the intensification of microbiological processes resulting from the heating-up of a mass in heating rolls. During rolling process due to powerful shear stresses in the narrow gap between the rollers a partial destruction of the molecular structure of the processed material takes place, which leads to changes similar to microbial action.

All the said operations in the heated continuous rollers are performed simultaneously.

Then the pellets enter the heated continuous vacuum dryer 12, where they are dried to the required moisture content under vacuum-pulse mode. Humidity limit of 20% for pellets is the best. At higher humidity and during storage the activation of the processes of fertilizer humification with the loss of market condition is possible.

A soil can also be processed by the proposed method.

The proposed method and an apparatus for its realization allow manufacturing pelletized organomineral fertilizers from various organic wastes with the addition of organomineral components required to comply with the requirements of the zonal agrochemical industry. At that, in comparison with the prior art, a production cycle duration is shorten due to a combination of a number of operations.

In particular, as a source of raw materials sewage sludges with the addition of sodium humate and mineral components (potassium sulphate and urea) in the amount of 5% based on solids have been selected. The chemical composition of the fertilizer is: N - 1,06%, P₂O₅ -0,80%, K₂O -0,52% and meets the needs of plants for food.

The results of the studies of obtained fertilizer also show increased performance properties of pellets due to compaction by rollers and thermal vacuum pulse action.

Field testing of pelletized organ-mineral fertilizer showed its effectiveness. Potato yield increase was 16%, flax -47%.

It was also found that at moisture of pellets up to 20% its stability is ensured at during prolonged storage.

## Claims

1. The method of production of pelletized organomineral fertilizer from organic waste, which includes supply of the mixture components, removing of solids, mixing with the addition of mineral components, grinding, disinfecting, homogenization, pelletizing and drying, wherein the grinding, disinfecting, homogenization and pelletizing are carried out simultaneously in the heated rollers with continuous transmission of processed mass through shaping rings of rollers and cutting-off as pellets, and the drying is carried out in a heated vacuum dryer under a continuous vacuum-pulse mode.

2. The method of claim 1, wherein prior mixing the components of the mixture are dehydrated by means of pressing out free moisture on the belt conveyor with the pressure-exerting rollers using the vacuum-pulse action modes.

3. The method of claim 2 wherein the following pressing out of a free moisture is removed by forced vacuum pulse passing of the heated coolant gas through a layer of the mixture components.

4. The method of claim 1, wherein while mixing the components of the mixture the organic admixtures are added.

5. The method of claim 1, wherein the pellet drying process in a heated vacuum continues dryer is performed to obtain a humidity not exceeding 20%.

6. Apparatus for the manufacturing of pelletized organomineral fertilizer from organic waste, including means to supply components of the mixture, removing solids, mixing, grinding, disinfecting, homogenization, pelletizing and drying, wherein the means of grinding, disinfecting, homogenization and pelletizing are made in the form of one or several installed in parallel heated horizontal rollers placed after mixing means and having end shaping rings with the knives on the border for cutting-off pellets in size, and a means for drying is made in the form of heated vacuum continuous dryer, connected by a pipeline with quick-acting valves to a receiver and a vacuum pump.

7. The device of claim 6, wherein it additionally comprises a means for pre-grinding of the mixture components which is installed after the means for solids removal.

8. The device of claim 6, wherein it is equipped with a means of dehydration which is installed before the mixing means and is made in the form of a belt vacuum filter with pressure-exerting rollers connected by pipeline with quick-acting valves to a receiver and a vacuum pump.

9. The device of claim 8, wherein it contains an additional means of dehydration, made in the form of belt vacuum filter with pressure-exerting rollers connected to a source of heated coolant gas on the one hand and the pipe with quick-response valves and receiver, and to a vacuum pump on the opposite side for a forced passing of a coolant gas.
